# EUROPÄISCHE PATENTSCHRIFT

(11) **EP 3 208 464 B1**
(45) Veröffentlichungstag und Bekanntmachung des Hinweises auf die Patenterteilung: **27.06.2018**
(21) Anmeldenummer: 17150835.1
(22) Anmeldetag: 10.01.2017
(51) Int. Cl.: F04D 13/06, F04D 29/041, F04D 29/046, F04D 29/42, F04D 29/66

(54) **KREISELPUMPE**
CENTRIFUGAL PUMP
POMPE CENTRIFUGE

(30) Priorität: 17.02.2016 DE 102016202417
(43) Veröffentlichungstag der Anmeldung: 23.08.2017
(73) Patentinhaber: Bühler Motor GmbH, 90459 Nürnberg (DE)
(72) Erfinder: EHRSAM, Jürgen, 90766 Fürth (DE)

(56) Entgegenhaltungen:
- EP-A1- 0 771 957
- DE-A1- 10 140 613
- DE-A1-102006 021 244
- DE-A1-102011 075 227
- DE-B3-102011 079 224

## Beschreibung

Die Erfindung betrifft eine Kreiselpumpe (1), insbesondere zur Kühlmittelförderung in Fahrzeugen, mit einem aus urformbarem Material hergestellten Pumpengehäuse, bestehend aus einem Pumpenkopf (16), welcher mit einem Saugstutzen (2), einem Druckstutzen (3), mindestens einer Speiche (11) und einem Lagerträger (12) einstückig ist, in welchem ein Gegenlager (10) montiert ist, worin ein erster Bereich (4) einer Achse (5) abgestützt ist, um welche ein Pumpenlaufrad (6) über ein im Pumpenlaufrad (6) festgelegtes Gleitlager (7) drehbeweglich gelagert ist, wobei die mindestens eine Speiche (11) den Lagerträger (12) in einer zentralen Position innerhalb des Pumpenkopfs (16) hält, und mit einem Spalttopf (30), welcher einen Nassraum von einem Trockenraum trennt und in welchem ein zweiter Bereich (28) der Achse (5) abgestützt ist, wobei ein bewickelter Stator (19) im Trockenraum und ein Permanentmagnetrotor (20) eines elektronisch kommutierten Gleichstrommotors im Nassraum aufgenommen ist und der Permanentmagnetrotor (20) mit dem Pumpenlaufrad (6) eine Baueinheit bildet.

Bei Verbrennungsmotoren im Kfz-Bereich sind in der Regel von der Kurbelwelle über einen Zahnriemen angetriebene mechanische Kreiselpumpen als Hauptkühlwasserpumpe vorhanden. Als Unterstützung oder ersatzweise bei abgestelltem Verbrennungsmotor kommen elektrische Zusatzkühlwasserpumpen zum Einsatz, die in der Regel als elektronisch kommutierte Gleichstrommotoren ausgebildet sind. Da diese in unmittelbarer Nähe oder direkt am Verbrennungsmotor angeordnet sind, sind diese den hohen Temperaturen und Schwingungsbelastungen des Verbrennungsmotors ausgesetzt. Zusätzliche Schwingungen können vom Elektromotor und dem hydraulischen Teil der Kühlwasserpumpe selbst erzeugt werden. Auch Hauptkühlwasserpumpen können elektrisch betrieben sein und die gleichen Probleme aufweisen. Selbst bei Elektrofahrzeugen sind Kühlwasserpumpen erforderlich, welche z. B. für eine Akkumulator-Kühlung sorgen.

Aus der DE 10 2010 019502 A1 ist eine gattungsgemäße Kühlwasserpumpe bekannt, bei der ein Pumpenlaufrad auf einer zentralen Achse drehbeweglich gelagert ist, welche einerseits in einem Spalttopf und andererseits in einem Pumpenkopf abgestützt und festgelegt ist. Ein hohlzylindrisches Gleitlager ist Bestandteil des Pumpenlaufrads, welches Gleitlager sich axial an ebenen Stirnflächen von Gegenlagern abstützen kann. Eines der Gegenlager ist im Pumpenkopf in einem Lagerträger aufgenommen, welches über gerade Speichen mit dem Pumpenkopf verbunden ist. Schwingungen, die im Betrieb entstehen, werden auf diese Weise weitgehend ungedämpft vom Pumpenlaufrad auf den Pumpenkopf übertragen. Weiter entstehen Geräusche durch Schwankungen der radialen Lage des Pumpenlaufrads um die Achse.

Aus der nächstliegenden DE 10 2006 021 244 A1 ist eine Kreiselpumpe bekannt, und zwar zur Kühlmittelförderung in Fahrzeugen, mit einem aus urformbarem Material hergestellten Pumpengehäuse, bestehend aus einem Pumpenkopf, welcher mit einem Saugstutzen, einem Druckstutzen, einer Speiche und einem Lagerträger einstückig ist, in welchem ein Gegenlager montiert ist, worin ein erster Bereich einer Achse abgestützt ist, um welche ein Pumpenlaufrad über ein im Pumpenlaufrad festgelegtes Gleitlager drehbeweglich gelagert ist, wobei die Speiche den Lagerträger in einer zentralen Position innerhalb des Pumpenkopfs hält und mit einem Spalttopf, welcher einen Nassraum von einem Trockenraum trennt und in welchem ein zweiter Bereich der Achse abgestützt ist, wobei ein bewickelter Stator im Trockenraum aufgenommen ist und ein Permanentmagnetrotor eines elektronisch kommutierten Gleichstrommotors im Nassraum aufgenommen ist und der Permanentmagnetrotor mit dem Pumpenlaufrad eine Baueinheit bildet, wobei das Gleitlager eine innenzylindermantelförmige Radiallagerfläche und eine Axiallagerfläche aufweist, und die Axiallagerfläche an einer Gegenlagerfläche eines Gegenlagers axial abstützbar ist, welches in dem Lagerträger gehalten ist, wobei der Lagerträger derart mit dem Saugstutzen verbunden ist, dass zumindest eine Schwingungsrichtungsänderung zwischen dem Lagerträger und dem Saugstutzen bewirkbar ist.

Aus der DE 101 40 613 A1 ist eine Kreiselpumpe, insbesondere zur Kühlmittelförderung in Fahrzeugen bekannt, die ein eine konvexe bzw. konkave Axiallagerfläche aufweisendes Gleitlager und ein entsprechendes Gegenlager offenbart.

Aufgabe der Erfindung ist es daher bei einer gattungsgemäßen Kreiselpumpe für eine Zentrierung des Pumpenlaufrads und für eine Dämpfung von Schwingungen zu sorgen, welche vom Pumpenlaufrad auf den Pumpenkopf und damit das Gehäuse der Kreiselpumpe übertragen werden, wodurch unangenehme Geräusche weitgehend vermieden werden sollen.

Diese Aufgabe wird erfindungsgemäß durch die Merkmale des Anspruchs 1 gelöst. Eine konvexe oder konkave Axiallagerfläche des Gleitlagers wirkt mit einer konkaven bzw. konvexen Gegenlagerfläche eines Gegenlagers zusammen und bewirkt eine Selbstzentrierung des Pumpenlaufrads innerhalb des Pumpenraums. Hierdurch werden radiale Schwankungsbewegungen minimiert und es verringern sich vom Pumpenlaufrad ausgehende Schwingungen. Die darüber hinaus erzeugten Schwingungen werden über zumindest eine Schwingungsrichtungsänderung zwischen dem Lagerträger und dem Saugstutzen gedämpft. Dabei wird Schwingungsenergie durch innere Reibung in Wärmeenergie umgewandelt und durch das Kühlmittel abtransportiert. Auf diese Weise werden unangenehme Geräusche weitgehend vermieden bzw.
abgedämpft. Jede Richtungsänderung bewirkt eine Dämpfung von Schwingungen. Richtungsänderungen drücken sich durch Wendepunkte in Kurven aus. Deshalb wird vorgeschlagen, dass die Speichen zwischen dem Lagerträger und dem Saugstutzen eine Kurve mit zumindest einem Wendepunkt beschreiben.

Weiterbildungen der Erfindung werden in den Unteransprüchen dargestellt. Dadurch, dass ein erster Übergangsbereich zwischen einer Speiche und dem Lagerträger in Axialrichtung deutlich von einem zweiten Übergangsbereich zwischen derselben Speiche und dem Saugstutzen beabstandet ist, können Schwingungen weniger direkt angekoppelt und übertragen werden, so dass es zu einem Dämpfungseffekt kommt.

Dieser Effekt wird insbesondere dann erreicht, wenn der erste Übergangsbereich sich nicht mit dem zweiten Übergangsbereich axial überlappt.

Es hat sich als vorteilhaft erwiesen, wenn die Speichen im Wesentlichen radial aus dem Saugstutzen vorspringen und axial in den Lagerträger übergehen. Hierdurch wird zumindest eine Richtungsänderung für die Schwingungsausbreitung um ca. 90° erreicht.

Eine noch bessere Dämpfung wird demnach erreicht, wenn die Speichen zwischen dem Lagerträger und dem Saugstutzen eine Kurve mit zumindest zwei Wendepunkten beschreiben.

Um die Schwingneigung von vornherein zu verringern wird eine Selbstzentrierung des Pumpenlaufrads angestrebt. Deshalb sollte die Axiallagerfläche des Gleitlagers konvex und die Gegenlagerfläche des Gegenlagers konkav ausgebildet sein. Es ist auch denkbar die Axiallagerfläche des Gleitlagers konkav und die Gegenlagerfläche des Gegenlagers konvex auszubilden.

Eine konvexe Axiallagerfläche bzw. eine konvexe Gegenlagerfläche ist als Kugelringabschnitt ausgeführt, an welchem sich jeweils eine hohlzylindrische Innenfläche und eine zylindrische Außenfläche anschließt.

Zweckmäßigerweise sind drei Speichen zwischen dem Lagerträger und dem Saugstutzen vorhanden und mit dem Pumpenkopf einstückig. Denkbar sind aber auch eine oder zwei Speichen.

Eine zweite Ausführungsform der Erfindung sieht vor, dass das Gleitlager und/oder das Gegenlager einen Ringkragen aufweist/aufweisen, welche als Axialanschlag dienen.

Insbesondere bei der zweiten Ausführungsform ist es vorteilhaft, dass die Radien der Axiallagerflächen des Gleitlagers und des Gegenlagers geringfügig voneinander abweichen, so dass eine Berührung vorzugsweise im achsnahen Bereich auftritt. In diesem Bereich ist der Reibradius geringer, wodurch ein geringerer mechanischer Widerstand auftritt. Weiter ist die Anlagefläche kleiner als bei gleichen Radien, so dass Fertigungsungenauigkeiten sich weniger negativ auswirken können. Durch Verschleiß über die Lebensdauer können sich die Anlageflächen vergrößern.

Um eine Überbestimmung zu vermeiden, ist zwischen der Achse (5) und dem Gleitlager (7) ein geringfügiger Ringspalt vorhanden und die Radiallagerung erfolgt im Betrieb über das Gegenlager (10). Aufgrund von Druckunterschieden besteht ein Axialzug des Pumpenlaufrads in Richtung Saugstutzen, wodurch das Gleitlager (7) mit dem Gegenlager (10) in Anlage gehalten wird. Durch die sphärische Geometrie der Axiallagerflächen können die relativ geringen Radiallagerkräfte aufgenommen werden. Hierdurch zentriert sich das Pumpenlaufrad (6) am Gegenlager (10). Die radiale Lagerfläche des Gleitlagers (7) dient im Wesentlichen als Abstützung im Ruhezustand oder bei von außen auf die Kreiselpumpe einwirkenden Stößen.

Gemäß einer vorteilhaften Weiterbildung der Erfindung werden das Gleitlager (7) und/oder das Gegenlager (10) durch Urformen gefügt. Dies ergibt eine sehr feste und innige Verbindung. Um die Robustheit der Verbindung weiter zu steigern, weist das Gleitlager (7) und/oder das Gegenlager (10) am Außenumfang eine Rändelung auf. Hierdurch kann das umgebende Material sich beim Urformen noch besser mit dem jeweiligen Lager verbinden.

Für das Gleitlager (7) und das Gegenlager (10) sind verschiedene Materialpaarungen verwendbar, z. B. Stahl mit Stahl oder Stahl mit Kunststoff oder Keramik mit Keramik oder Keramik mit Kunststoff. Als geeignetes Kunststoffmaterial hat sich Kohlefaserkunststoff erwiesen, insbesondere Polyphenylensulfid (PPS) mit 30% Kohlefasern. Bei Verwendung von Stahl als Lagermaterial ist das Lager in der Regel durch Kaltumformung hergestellt. Um eine hohe Abriebfestigkeit zu erreichen, kann dieses Lager als gehärtetes Stahllager ausgeführt sein.

Der Pumpenkopf kann aus spritzgusstechnisch verarbeitbarem Kunststoffmaterial oder bei höheren Anforderungen an die Festigkeit und Entwärmungseigenschaften aus einem druckgießbaren Metallmaterial, wie Aluminium (Alu-Druckguss), bestehen.

Nachfolgend wird die Erfindung anhand von Ausführungsbeispielen beschrieben, die anhand der Abbildungen näher erläutert werden. Hierbei zeigen:
Fig. 1 eine Schnittdarstellung einer erfindungsgemäßen Kreiselpumpe,
Fig. 2 einen vergrößerten Ausschnitt A aus Fig. 1,
Fig. 3 eine Kreiselpumpe gemäß Stand der Technik,
Fig. 4 ein Gegenlager mit Ringkragen,
Fig. 5 ein Gleitlager mit Ringkragen,
Fig. 6 eine Schnittdarstellung einer zweiten Ausführungsform,
Fig. 7 eine stilisierte Darstellung einer Speiche,
Fig. 8 eine Variante der Speiche und
Fig. 9 eine zweite Variante der Speiche

Hinweis: Bezugszeichen mit Apostroph und entsprechende Bezugszeichen ohne Apostroph bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Apostroph.

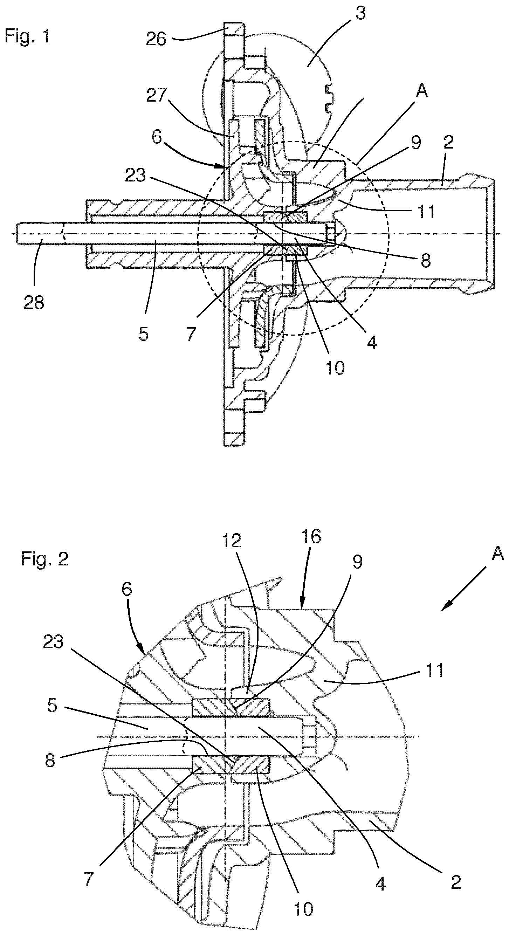

Fig. 1 zeigt eine Schnittdarstellung mit den für die Erfindung wesentlichen Teilen einer Kreiselpumpe. Insbesondere sind dargestellt: ein Pumpenkopf 16, mit einem Saugstutzen 2, einem Druckstutzen 3, Speichen 11, einem Lagerträger 12 und einem Pumpenkopfflansch 26, weiter ein auf einer Achse 5 angeordnetes Pumpenlaufrad 6, in welchem ein Gleitlager 7 befestigt ist, welches das Pumpenlaufrad 6 über eine Radiallagerfläche 8 auf der Achse 5 drehbeweglich lagert und welches sich axial an einem im Lagerträger 12 aufgenommenen Gegenlager 10 abstützt. Das Gleitlager 7 weist an seiner Stirnseite eine konvex ausgebildete sphärische Axiallagerfläche 9 auf, welche mit einer konkav ausgebildeten Gegenlagerfläche 23 des Gegenlagers 10 zusammenpasst und zusammenwirkt. Das Gegenlager 10 ist im Lagerträger 12 befestigt und dient sowohl der axialen Lagerung als auch der Zentrierung des Pumpenlaufrads 6. Das Pumpenlaufrad 6 ist hier ohne Permanentmagnet dargestellt, welcher unmittelbar an ein Flügelrad 27 anschließt. Die Achse 5 ist an einem ersten Bereich 4 im Lagerträger 12 und an einem weiteren, zweiten Bereich 28 in einem hier nicht sichtbaren Spalttopf abgestützt.

Fig. 2 zeigt den Lagerbereich der Einzelheit A aus Fig. 1 etwas vergrößert, mit dem Pumpenkopf 16, dem Saugstutzen 2, der Speiche 11, dem Lagerträger 12, der Achse 5, mit ihrem ersten Bereich (Endbereich) 4, dem Gleitlager 7, dem Gegenlager 10, dem Pumpenlaufrad 6. Deutlicher als in Fig. 1 sind hier die Radiallagerfläche 8, sowie die sphärische Axiallagerfläche 9 des Gleitlagers 7 und die konkav ausgebildete Gegenlagerfläche 23 des Gegenlagers 10 zu erkennen.

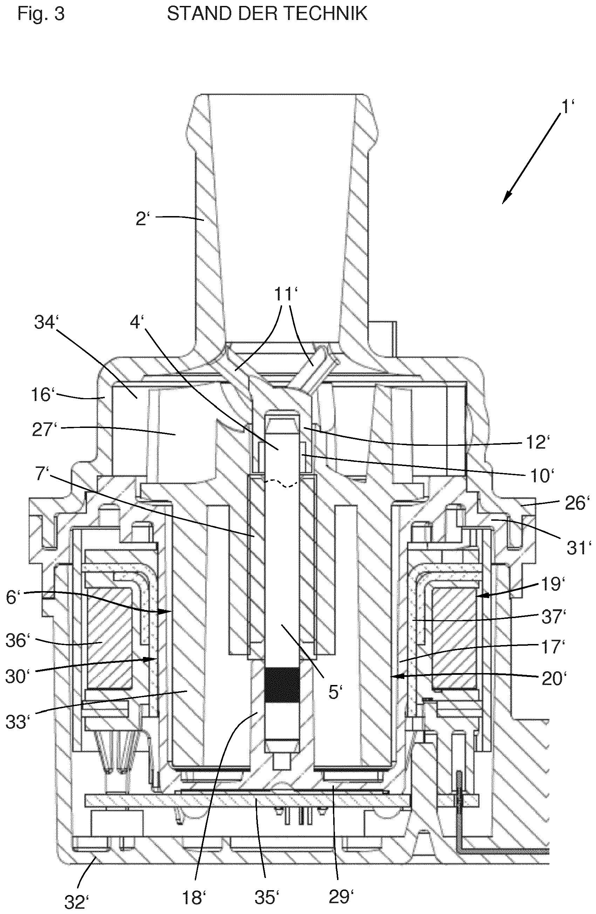

Fig. 3 zeigt eine aus dem Stand der Technik bekannte Kreiselpumpe 1', mit einem Pumpenkopf 16', welcher einen Saugstutzen 2', Speichen 11', einen Lagerträger 12' und einen Pumpenkopfflansch 26' umfasst, einem Spalttopf 30', welcher einen Topfboden 29', ein Spaltrohr 17', einen Spalttopfflansch 31' und eine aus dem Topfboden 29' vorspringende Achsaufnahme 18' umfasst, einem Pumpenlaufrad 6', welches einen Magnetring 33' und einem daran anschließenden Flügelrad 27', sowie ein Gleitlager 7' umfasst, einem Stator 19', einem Permanentmagnetrotor 20,' einer Leiterplatte 35' und einem Statorgehäuse 32'. Der Stator 19' und die Leiterplatte 35' sind in einem Trockenraum aufgenommen, welcher vom Spalttopf 30' und dem Statorgehäuse 32' begrenzt ist. Der Stator besteht aus einer Ringwicklung 36' und Klauenpolblechen 37'. Das Pumpenlaufrad 6' ist in einem aus dem Pumpenkopf 16' und dem Spaltrohr 30' gebildeten Pumpenraum 34' drehbeweglich auf einer Achse 5' aufgenommen, welche in der Achsaufnahme 18' und dem Lagerträger 12' aufgenommen und abgestützt ist. Im Lagerträger 12' ist ein Gegenlager 10' aufgenommen, das als Axialanlauf für das Gleitlager 7' dient. Die Speichen 11' verbinden den Pumpenkopf 16' mit dem Lagerträger 12' in gerader Linie.

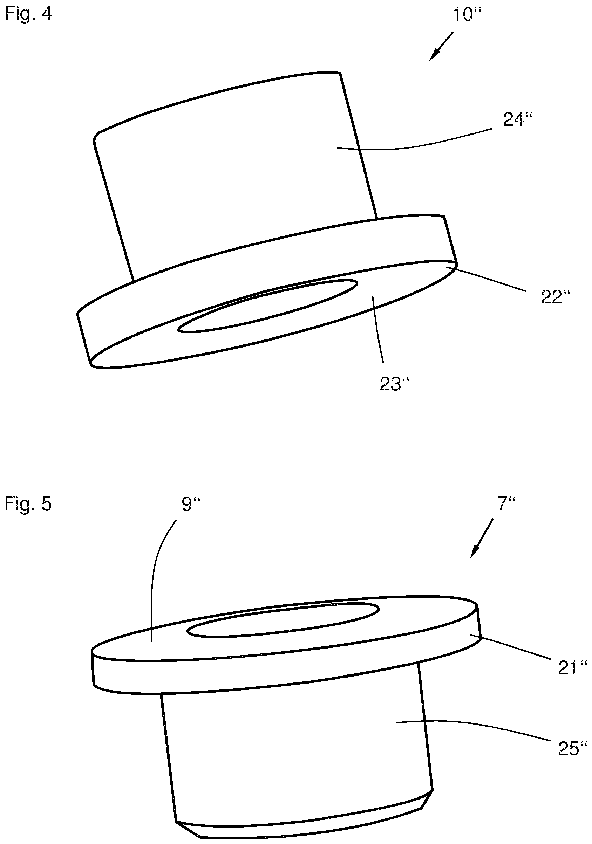

Fig. 4 zeigt ein alternative Ausführungsform eines Gegenlagers 10", welches einen ersten Hohlzylinder 24" und einen an seiner Stirnseite konkaven Ringkragen 22" umfasst. Eine axiale Gegenlagerfläche 23" wird durch die Stirnseite des ersten Hohlzylinders 24" und des Ringkragens 22" gebildet.

Fig. 5 zeigt eine alternative Ausführungsform eines Gleitlagers 7", welches einen zweiten Hohlzylinder 25" und einen an seiner Stirnseite konvexen Ringkragen 21" umfasst. Eine Axiallagerfläche 9" wird durch die Stirnseite des zweiten Hohlzylinders 25" und des Ringkragens 21" gebildet.

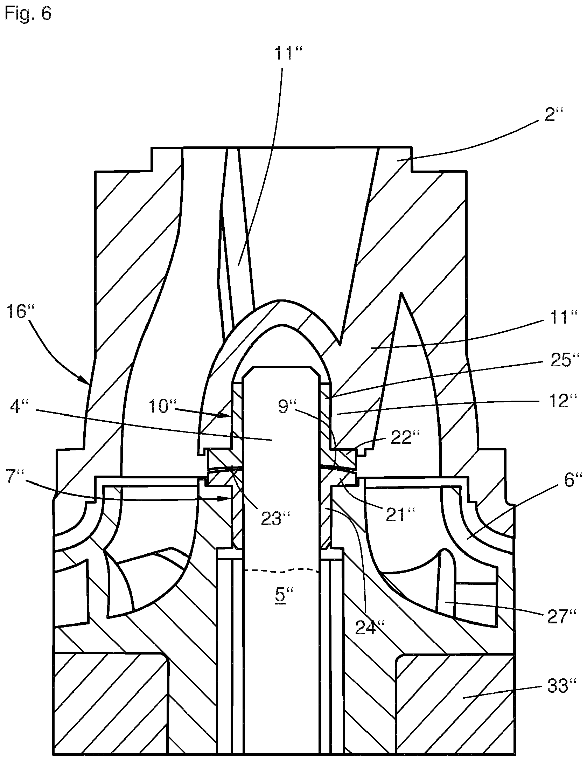

Fig. 6 zeigt eine Schnittdarstellung einer zweiten Ausführungsform der Erfindung, bei welcher die alternativen Ausführungsformen des Gleitlagers 7" und des Gegenlagers 10" aus den Fig. 4 und 5 eingesetzt sind. Es sind gezeigt ein Pumpenkopf 16", welcher Speichen 11", einen Lagerträger 12" und das Gegenlager 10" umfasst, ein Pumpenlaufrad 6", welches ein Flügelrad 27", das Gleitlager 7" und einen Magnetring 33" umfasst und eine Achse 5", welche mit einem ersten Bereich 4" im Gegenlager 10" aufgenommen ist. Das Gleitlager 7" ist fest mit dem Pumpenlaufrad 6" verbunden und das Gegenlager 10" ist fest mit dem Lagerträger 12" verbunden. Die konvexe Axiallagerfläche 9" und die konkave Gegenlagerfläche 23" führen zu einer Selbstzentrierung des Pumpenlaufrads 6". Die Radien der konkaven bzw. konvexen Flächen weichen hier geringfügig voneinander ab, so dass sich die beiden Flächen primär in ihrem achsnahen Bereich berühren. Verschleißbedingt kann sich die Größe der sich berührenden Flächen über die Lebensdauer vergrößern. Der konvexe Ringkragen 21" und der konkave Ringkragen 22" dienen auch als Axialanschlag bei der Montage im Pumpenlaufrad 6" bzw. im Lagerträger 12".

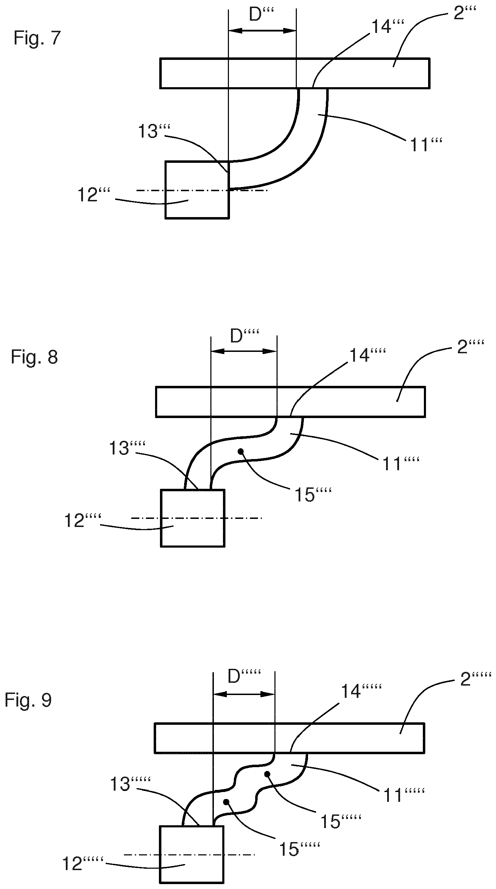

Fig. 7 zeigt eine stilisierte Darstellung einer Speiche 11"', welche keine Wendepunkte 15 aufweist, sondern radial von einem Saugstutzen 2'" vorspringt und axial an einen Lagerträger 12'" anschließt. Ein Übergangsbereich 13'" zwischen der Speiche 11'" und dem Lagerträger 12'" ist um die Länge D'" von einem Übergangsbereich 14'" zwischen dem Saugstutzen 2'" und der Speiche 11'" entfernt.

Fig. 8 zeigt eine stilisierte Darstellung einer Variante zu Fig. 7, mit einem Saugstutzen 2"", einer Speiche 11"" und einem Lagerträger 12"". Die Speiche 11"" weist einen Wendepunkt 15"" auf. Die Speiche 11"" springt aus dem Saugstutzen 2"" radial vor und schließt radial an den Lagerträger 12"" an. Ein Übergangsbereich 13"" zwischen der Speiche 11"" und dem Lagerträger 12"" ist um die Länge D"" von einem Übergangsbereich 14"" zwischen dem Saugstutzen 2"" und der Speiche 11"" entfernt.

Fig. 9 zeigt eine stilisierte Darstellung einer weiteren Variante zu Fig. 7 und 8, mit einem Saugstutzen 2'"", einer Speiche 11""' und einem Lagerträger 12'"". Die Speiche 11""' weist zwei Wendepunkte 15'"" auf. Die Speiche 11""' springt aus dem Saugstutzen 2'"" radial vor und schließt radial an den Lagerträger 12'"" an. Ein Übergangsbereich 13'"" zwischen der Speiche 11""' und dem Lagerträger 12'"" ist um die Länge D'"" von einem Übergangsbereich 14'"" zwischen dem Saugstutzen 2'"" und der Speiche 11""' entfernt.

Es sind auch Übergangsgeometrien zwischen diesen Beispielen denkbar. Auch die Form der Speiche kann erheblich von den Darstellungen abweichen, insbesondere kann die Querschnittsfläche der Speichen sich entlang ihres Verlaufs deutlich ändern.

### Bezugszeichenliste

| | | | |
|---|---|---|---|
| 1 | Kreiselpumpe | 33 | Magnetring |
| 2 | Saugstutzen | 34 | Pumpenraum |
| 3 | Druckstutzen | 35 | Leiterplatte |
| 4 | erster Bereich | 36 | Ringwicklung |
| 5 | Achse | 37 | Klauenpolblech |
| 6 | Pumpenlaufrad | | |
| 7 | Gleitlager | | |
| 8 | Radiallagerfläche | | |
| 9 | Axiallagerfläche | | |
| 10 | Gegenlager | | |
| 11 | Speiche | | |
| 12 | Lagerträger | | |
| 13 | erster Übergangsbereich | | |
| 14 | zweiter Übergangsbereich | | |
| 15 | Wendepunkt | | |
| 16 | Pumpenkopf | | |
| 17 | Spaltrohr | | |
| 18 | Achsaufnahme | | |
| 19 | Stator | | |
| 20 | Permanentmagnetrotor | | |
| 21 | konvexer Ringkragen | | |
| 22 | konkaver Ringkragen | | |
| 23 | axiale Gegenlagerfläche | | |
| 24 | erster Hohlzylinder | | |
| 25 | zweiter Hohlzylinder | | |
| 26 | Pumpenkopfflansch | | |
| 27 | Flügelrad | | |
| 28 | zweiter Bereich | | |
| 29 | Topfboden | | |
| 30 | Spalttopf | | |
| 31 | Spalttopfflansch | | |
| 32 | Statorgehäuse | | |

## Patentansprüche

1. Kreiselpumpe (1), insbesondere zur Kühlmittelförderung in Fahrzeugen, mit einem aus urformbarem Material hergestellten Pumpengehäuse, bestehend aus einem Pumpenkopf (16), welcher mit einem Saugstutzen (2), einem Druckstutzen (3), mindestens einer Speiche (11) und einem Lagerträger (12) einstückig ist, in welchem ein Gegenlager (10) montiert ist, worin ein erster Bereich (4) einer Achse (5) abgestützt ist, um welche ein Pumpenlaufrad (6) über ein im Pumpenlaufrad (6) festgelegtes Gleitlager (7) drehbeweglich gelagert ist, wobei die mindestens eine Speiche (11) den Lagerträger (12) in einer zentralen Position innerhalb des Pumpenkopfs (16) hält, und mit einem Spalttopf (30), welcher einen Nassraum von einem Trockenraum trennt und in welchem ein zweiter Bereich (28) der Achse (5) abgestützt ist, wobei ein bewickelter Stator (19) im Trockenraum aufgenommen ist und ein Permanentmagnetrotor (20) eines elektronisch kommutierten Gleichstrommotors im Nassraum aufgenommen ist und der Permanentmagnetrotor (20) mit dem Pumpenlaufrad (6) eine Baueinheit bildet, **dadurch gekennzeichnet, dass** das Gleitlager (7) eine innenzylindermantelförmige Radiallagerfläche (8) und eine konvexe oder konkave Axiallagerfläche (9) aufweist, die Axiallagerfläche (9) an einer Gegenlagerfläche (23) eines konkaven bzw. konvexen Gegenlagers (10) axial abstützbar ist, welches in dem Lagerträger (12) gehalten ist und der Lagerträger (12) derart mit dem Saugstutzen (2) verbunden ist, dass zumindest eine Schwingungsrichtungsänderung zwischen dem Lagerträger (12) und dem Saugstutzen (2) bewirkbar ist, wobei die Speiche oder die Speichen (11) zwischen dem Lagerträger (12) und dem Saugstutzen (2) eine Kurve mit zumindest einem Wendepunkt (15) beschreiben.

2. Kreiselpumpe nach Anspruch 1, **dadurch gekennzeichnet, dass** ein erster Übergangsbereich (13) zwischen einer Speiche (11) und dem Lagerträger (12) in Axialrichtung deutlich von einem zweiten Übergangsbereich (14) zwischen derselben Speiche (11) und dem Saugstutzen (2) beabstandet ist.

3. Kreiselpumpe nach Anspruch 2, **dadurch gekennzeichnet, dass** der erste Übergangsbereich (13) sich nicht mit dem zweiten Übergangsbereich (14) axial überlappt.

4. Kreiselpumpe nach Anspruch 2 oder 3, **dadurch gekennzeichnet, dass** die Speiche oder die Speichen (11) im Wesentlichen radial aus dem Saugstutzen (2) vorspringen und axial in den Lagerträger (12) übergehen.

5. Kreiselpumpe nach Anspruch 1, 2, 3 oder 4, **dadurch gekennzeichnet, dass** die Speiche oder die Speichen (11) zwischen dem Lagerträger (12) und dem Saugstutzen (2) eine Kurve mit zumindest zwei Wendepunkten (15) beschreiben.

6. Kreiselpumpe nach zumindest einem der vorangehenden Ansprüche, **dadurch gekennzeichnet, dass** die Axiallagerfläche (9) des Gleitlagers (7) konvex und die Gegenlagerfläche (23) des Gegenlagers (10) konkav ausgebildet ist.

7. Kreiselpumpe nach zumindest einem der vorangehenden Ansprüche, **dadurch gekennzeichnet, dass** die Axiallagerfläche (9) oder die Gegenlagerfläche (23) ein Kugelringabschnitt ist.

8. Kreiselpumpe nach zumindest einem der vorangehenden Ansprüche, **dadurch gekennzeichnet, dass** eine, zwei oder drei Speichen (11) zwischen dem Lagerträger (12) und dem Saugstutzen (2) vorhanden und mit dem Pumpenkopf (16) einstückig sind.

9. Kreiselpumpe nach zumindest einem der vorangehenden Ansprüche, **dadurch gekennzeichnet, dass** das Gleitlager (7) und/oder das Gegenlager (10) einen Ringkragen (21, 22) aufweist/aufweisen.

10. Kreiselpumpe nach zumindest einem der vorangehenden Ansprüche, **dadurch gekennzeichnet, dass** die Radien der Axiallagerflächen (9, 23) des Gleitlagers (7) und des Gegenlagers (10) geringfügig voneinander abweichen, so dass eine Berührung vorzugsweise im achsnahen Bereich auftritt.

11. Kreiselpumpe nach zumindest einem der vorangehenden Ansprüche, **dadurch gekennzeichnet, dass** zwischen der Achse (5) und dem Gleitlager (7) ein geringfügiger Ringspalt vorhanden ist und die Radiallagerung im Betrieb über das Gegenlager (10) erfolgt.

12. Kreiselpumpe nach zumindest einem der vorangehenden Ansprüche, **dadurch gekennzeichnet, dass** das Gleitlager (7) und/oder das Gegenlager (10) durch Urformen gefügt ist.

13. Kreiselpumpe nach Anspruch 12, **dadurch gekennzeichnet, dass** das Gleitlager (7) und/oder das Gegenlager (10) am Außenumfang eine Rändelung aufweisen.

14. Kreiselpumpe nach zumindest einem der vorangehenden Ansprüche, **dadurch gekennzeichnet, dass** das Gleitlager (7) aus Stahl und das Gegenlager (10) aus Kunststoff, insbesondere Kohlefaser-Kunststoff, besteht oder umgekehrt.

15. Kreiselpumpe nach zumindest einem der vorangehenden Ansprüche, **dadurch gekennzeichnet, dass** das Gleitlager (7) und/oder das Gegenlager (10) aus Stahl bestehen.

16. Kreiselpumpe nach zumindest einem der vorangehenden Ansprüche, **dadurch gekennzeichnet, dass** das Gleitlager (7) und/oder das Gegenlager (10) aus Keramik bestehen.

## Claims

1. A centrifugal pump (1), in particular for supplying coolant in vehicles, having a pump housing manufactured from primary formable material, consisting of a pump head (16) which is integral with a suction branch (2), a discharge branch (3), at least one spoke (11) and a bearing support (12) in which a counter bearing (10) is mounted, in which there is supported a first region (4) of an axle (5) about which a pump impeller (6) is rotatably mounted via a plain bearing (7) fixed in the pump impeller (6), wherein the at least one spoke (11) holds the bearing support (12) in a central position within the pump head (16), and having an isolation shell (30) which divides a wet chamber from a dry chamber and in which there is supported a second region (28) of the axle (5), wherein a wrapped stator (19) is received in the dry chamber and a permanent magnet rotor (20) of an electronically commutated direct-current motor is received in the wet chamber and the permanent magnet rotor (20) forms a constructional unit together with the pump impeller (6), **characterised in that** the plain bearing (7) has an inner-cylinder-jacket-shaped radial bearing surface (8) and a convex or concave axial bearing surface (9), the axial bearing surface (9) is axially supportable on a counter bearing surface (23) of a concave or convex counter bearing (10) which is held in the bearing support (12) and the bearing support (12) is connected to the suction branch (2) in such a manner that at least one oscillation direction change can be effected between the bearing support (12) and the suction branch (2), wherein the spoke or the spokes (11) describe between the bearing support (12) and the suction branch (2) a curve with at least one inflection point (15).

2. A centrifugal pump according to claim 1, **characterised in that** a first transition region (13) between a spoke (11) and the bearing support (12) is in an axial direction clearly at a distance from a second transition region (14) between the same spoke (11) and the suction branch (2).

3. A centrifugal pump according to claim 2, **characterised in that** the first transition region (13) does not axially overlap with the second transition region (14).

4. A centrifugal pump according to claim 2 or 3, **characterised in that** the spoke or the spokes (11) project substantially radially from the suction branch (2) and axially become the bearing support (12).

5. A centrifugal pump according to claim 1, 2, 3 or 4, **characterised in that** the spoke or the spokes (11) describe between the bearing support (12) and the suction branch (2) a curve with at least two inflection points (15).

6. A centrifugal pump according to at least one of the preceding claims, **characterised in that** the axial bearing surface (9) of the plain bearing (7) is convex and the counter bearing surface (23) of the counter bearing (10) is concave.

7. A centrifugal pump according to at least one of the preceding claims, **characterised in that** the axial bearing surface (9) or the counter bearing surface (23) is a ball race portion.

8. A centrifugal pump according to at least one of the preceding claims, **characterised in that** one, two or three spokes (11) are present between the bearing support (12) and the suction branch (2) and are integral with the pump head (16).

9. A centrifugal pump according to at least one of the preceding claims, **characterised in that** the plain bearing (7) and/or the counter bearing (10) has/have an annular collar (21, 22).

10. A centrifugal pump according to at least one of the preceding claims, **characterised in that** the radii of the axial bearing surfaces (9, 23) of the plain bearing (7) and the counter bearing (10) differ slightly from one another so that there is contact preferably in the region close to the axle.

11. A centrifugal pump according to at least one of the preceding claims, **characterised in that** a slight annular gap is present between the axle (5) and the plain bearing (7) and in operation the radial mounting takes place via the counter bearing (10).

12. A centrifugal pump according to at least one of the preceding claims, **characterised in that** the plain bearing (7) and/or the counter bearing (10) is/are attached by primary forming.

13. A centrifugal pump according to claim 12, **characterised in that** the plain bearing (7) and/or the counter bearing (10) has/have knurling at the outer circumference.

14. A centrifugal pump according to at least one of the preceding claims, **characterised in that** the plain bearing (7) is made of steel and the counter bearing (10) of plastics material, in particular carbon fibre plastics material, or vice versa.

15. A centrifugal pump according to at least one of the preceding claims, **characterised in that** the plain bearing (7) and/or the counter bearing (10) is/are made of steel.

16. A centrifugal pump according to at least one of the preceding claims, **characterised in that** the plain bearing (7) and/or the counter bearing (10) is made of ceramic material.

## Revendications

1. Pompe centrifuge (1), en particulier pour le transport d'agent réfrigérant dans des véhicules, avec un boîtier de pompe fabriqué en un matériau pouvant être mis en forme par mise en forme primitive, consistant en une tête de pompe (16), qui est d'une pièce avec une tubulure d'aspiration (2), une tubulure de refoulement (3), au moins un rayon (11) et un support de palier (12), dans lequel est monté un contre-palier (10), où un premier domaine (4) d'un axe (5) est soutenu, autour duquel est montée de manière à pouvoir tourner une roue à aubes de pompe (6) par l'intermédiaire d'un palier lisse (7) fixé dans la roue à aubes de pompe (6), où le au moins un rayon (11) maintient le support de palier (12) dans une position centrale à l'intérieur de la tête de pompe (16), et avec un pot de division (30), qui sépare un espace humide d'un espace sec et dans lequel un second domaine (28) de l'axe (5) est soutenu, où un stator bobiné (19) est logé dans l'espace sec et un rotor à aimant permanent (20) d'un moteur à courant continu commuté électroniquement est logé dans l'espace humide et le rotor à aimant permanent (20) forme une unité de construction avec la roue à aubes de pompe (6), **caractérisée en ce que** le palier lisse (7) présente une surface de palier radiale (8) en forme d'enveloppe cylindrique interne et une surface de palier axiale (9) convexe ou concave, la surface de palier axiale (9) peut être soutenue axialement contre une surface de contre-palier (23) d'un contre-palier (10) concave ou convexe, qui est maintenu dans le support de palier (12) et le support de palier (12) est relié avec la tubulure d'aspiration (2) de telle manière qu'au moins une modification de la direction d'oscillation entre le support de palier (12) et la tubulure d'aspiration (2) peut être réalisée, où le rayon ou les rayons (11) décrivent entre le support de palier (12) et la tubulure d'aspiration (2) une courbe avec au moins un point d'inflexion (15).

2. Pompe centrifuge selon la revendication 1, **caractérisée en ce qu'**un premier domaine de transition (13) entre un rayon (11) et le support de palier (12) dans la direction axiale est nettement distant d'un second domaine de transition (14) entre le même rayon (11) et la tubulure d'aspiration (2).

3. Pompe centrifuge selon la revendication 2, **caractérisée en ce que** le premier domaine de transition (13) et le second domaine de transition (14) ne se chevauchent pas axialement.

4. Pompe centrifuge selon la revendication 2 ou 3, **caractérisée en ce que** le rayon ou les rayons (11) font saillie sensiblement radialement de la tubulure d'aspiration (2) et se transforment axialement en le support de palier (12).

5. Pompe centrifuge selon la revendication 1, 2, 3 ou 4, **caractérisée en ce que** le rayon ou les rayons (11) décrivent entre le support de palier (12) et la tubulure d'aspiration (2) une courbe avec au moins deux points d'inflexion (15).

6. Pompe centrifuge selon au moins l'une des revendications précédentes, **caractérisée en ce que** la surface de palier axiale (9) du palier lisse (7) est formée de manière convexe et la surface de contre-palier (23) du contre-palier (10) est formée de manière concave.

7. Pompe centrifuge selon au moins l'une des revendications précédentes, **caractérisée en ce que** la surface de palier axiale (9) ou la surface de contre-palier (23) est un secteur d'anneau sphérique.

8. Pompe centrifuge selon au moins l'une des revendications précédentes, **caractérisée en ce qu'**un, deux ou trois rayons (11) sont présents entre le support de palier (12) et la tubulure d'aspiration (2) et sont d'une pièce avec la tête de pompe (16).

9. Pompe centrifuge selon au moins l'une des revendications précédentes, **caractérisée en ce que** le palier lisse (7) et/ou le contre-palier (10) présente/présentent un col annulaire (21, 22).

10. Pompe centrifuge selon au moins l'une des revendications précédentes, **caractérisée en ce que** les rayons des surfaces de palier axiales (9, 23) du palier lisse (7) et du contre-palier (10) diffèrent légèrement entre eux, de sorte qu'un contact survient de préférence dans le domaine proche de l'axe.

11. Pompe centrifuge selon au moins l'une des revendications précédentes, **caractérisée en ce qu'**une petite fente annulaire est présente entre l'axe (5) et le palier lisse (7) et le logement radial des paliers a lieu pendant le fonctionnement par le biais du contre-palier (10).

12. Pompe centrifuge selon au moins l'une des revendications précédentes, **caractérisée en ce que** le palier lisse (7) et/ou le contre-palier (10) est adapté par mise en forme primitive.

13. Pompe centrifuge selon la revendication 12, **caractérisée en ce que** le palier lisse (7) et/ou le contre-palier (10) présentent sur la périphérie externe un moletage.

14. Pompe centrifuge selon au moins l'une des revendications précédentes, **caractérisée en ce que** le palier lisse (7) consiste en acier et le contre-palier (10) consiste en matière synthétique, en particulier en matière synthétique avec des fibres de carbone, ou inversement.

15. Pompe centrifuge selon au moins l'une des revendications précédentes, **caractérisée en ce que** le palier lisse (7) et/ou le contre-palier (12) consistent en acier.

16. Pompe centrifuge selon au moins l'une des revendications précédentes, **caractérisée en ce que** le palier lisse (7) et/ou le contre-palier (12) consistent en céramique.
